# EUROPÄISCHE PATENTSCHRIFT

(11) **EP 0 387 555 B1**
(45) Veröffentlichungstag und Bekanntmachung des Hinweises auf die Patenterteilung: **23.11.1994**
(21) Anmeldenummer: 90103379.5
(22) Anmeldetag: 22.02.1990
(51) Int. Cl.: C23G 3/02, B65G 49/04

(54) **Vorschubsystem für Bandmaterial, insbesondere bei Bandbehandlungsanlagen für Metallband**
Threading system for strip material, especially for metallic strips in strip treating installations
Système d'avance pour feuillards, en particulier pour installations de traitement de feuillards métalliques

(30) Priorität: 10.03.1989 DE 3907749
(43) Veröffentlichungstag der Anmeldung: 19.09.1990
(73) Patentinhaber: SMS SCHLOEMANN-SIEMAG AKTIENGESELLSCHAFT, 40237 Düsseldorf (DE)
(72) Erfinder: Richert, Withold, D-5142 Hückelhoven 2 (DE)
(74) Vertreter: Müller, Gerd, Dipl.-Ing.

(56) Entgegenhaltungen:
- AT-B- 248 364
- DE-A- 3 519 019
- DE-C- 617 497
- DE-C- 1 101 903
- GB-A- 1 333 943
- US-A- 3 126 138
- "Glückauf", Bd. 109, Nr. 5 (1073); S. 308-315: R. Schütz: "Asynchrone Linearmotoren und ihre Anwendungen"

## Beschreibung

Die Erfindung betrifft ein Vorschubsystem für Bandmaterial zum Transportieren eines Bandes über eine Förderstrecke begrenzter Länge, insbesondere bei Bandbehandlungsanlagen für Metallband, mit einem an einer Schienenführung geführten, das Band aufnehmenden Schleppwagen mit einer Vorrichtung zum vorübergehenden Festhalten des Bandanfanges am Schleppwagen, sowie mit einer reversierbaren Antriebsvorrichtung für den Antrieb des Schleppwagens entlang der Förderstrecke.

Das gegenständliche Problem ist am besten anhand von Beizlinien für Metallband zu erläutern. Die bisher gebauten Beizanlagen lassen sich in drei Bauarten unterteilen:
a) Schub-Beizanlage für Produktionen von ca. 300.000 t/a
b) halbkontinuierliche Beizanlage für Produktionen von ca. 500.000 t/a,
c) kontinuierliche Beizanlage für Produktionen von bis zu 2.300.000 t/a.

Bei der Betrachtung der drei Bauarten stellt man fest, daß die halbkontinuierliche Beizanlage und die kontinuierliche Beizanlage nach demselben System, dem Endlosband, arbeiten. Sie unterscheiden sich nur durch den mehr oder weniger hohen Aufwand der mechanischen Einrichtungen zur Überbrückung der Einlauf- und Auslaufnebenzeiten, wie Bundwechsel und Schweißen.

Bei der Schub-Beizanlage wird jedes Band neu eingefädelt und erst - nachdem mit dem Bandanfang ca. drei Windungen auf dem Aufwickelhaspel gewickelt wurden - wird Bandzug aufgebracht und die Anlage auf Beizgeschwindigkeit hochgefahren. Die bestechend einfache maschinelle Ausrüstung der Schub-Beizanlage (sie hat nur Abwickelhaspel, Richtmaschine, Beizteil, Querteilschere und Aufwickelhaspel) hat schon sehr oft zu Versuchen geführt, durch Erhöhung der Einfädelgeschwindigkeit und zusätzliche Leitsysteme die Leistungsfähigkeit zu erhöhen. Zusätzliche Schwierigkeiten erwachsen zudem bei dünneren Bändern etwa unter 2,5 mm Banddicke, wenn solche unsteifen Bänder über die erforderliche Strecke vorgeschoben werden müssen. Die Schub-Beizanlage hat daher keine größere Anwendung gefunden.

Die GB-A-1 333 943 offenbart eine Beizanlage für Metallprodukte wie Bänder, Draht oder Stangen. Die Produkte werden mit Hilfe eines Schleppwagens über eine Förderstrecke begrenzter Länge durch tragförmige Wannen der Beizanlage hindurchgezogen und am Ende der Anlage zu einem Coil aufgewickelt. Der Schleppwagen ist in Schienen geführt und wird mit Zugseilen über die Förderstrecke hin- und hergezogen.

Nachteilig bei dieser Antriebsanordnung sind die über die gesamte Länge der Walzanlage geführten Zugseile bzw. Kettenführungen bzw. andere konventionelle Antriebsvorrichtungen wie mitgeführte Antriebsfahrwerke etc. Diese erfordern ein hohes Maß an Wartung und unterliegen dabei ständigem Verschleiß.

Der Erfindung liegt die Aufgabe zugrunde, ein Vorschubsystem für Bandmaterial insbesondere bei Bandbehandlungsanlagen wie Beizanlagen anzugeben, das in gleicher Weise für dünne und dicke Bänder verwendbar ist und in der Anwendung auf Beizanlagen trotz diskontinuierlicher Zufuhr von Bändern (wie bei der Schubbeizanlage) Produktionen ermöglicht, die denen einer kontinuierlichen Beizanlage gleichkommen und die vorgenannten Nachteile vermeiden, wobei insbesondere auf Antriebsanordnungen wie Kettenführungen, Drahtseile o.ä., oder auf mitgeführte motorische Fahrantriebe verzichtet werden kann.

Die Lösung dieser Aufgabe besteht in den kennzeichnenden Merkmalen des Patentanspruchs 1. Letztlich wird hierdurch in der Anwendung auf Beizanlagen eine leistungsfähige "Zieh-Beizanlage" geschaffen, die auf aufwendige und verschleißträchtige Schlepphilfsmittel wie Drahtseile Kettenführung und dergleichen verzichtet, wobei gleichzeitig durch Integrierung der stromdurchflossenden aktiven Motorteile in der Schienenführung erreicht wird, daß dem Schleppwagen zum Antrieb der Linearmotore über die Förderstrecke keine elektrische Energie zugeführt zu werden braucht, was die Anwendung einer Kabelschleppkette oder dergleichen bedeuten würde.

Konstruktive Ausführungen des Schleppwagens und der Linearmotore sind den Patentansprüchen 2 und 3 zu entnehmen. Eine bevorzugte Einrichtung zum reibungschlüssigen Festhalten des Bandanfanges innerhalb des Schleppwagens unter Verwendung von Druckluft ist in dem Patentanspruch 4 angegeben. Zu der hierin erwähnten Technik des Dockingsystems wird beispielsweise verwiesen auf die DE-A1-3519019, die DE-A1-3023359 sowie die EP-A-0162187.

Weiterbildungen des Vorschubsystems mit Dockingfestplatte des Schleppwagens und über jeweils eine Kuppelstrecke hin- und herbeweglichen Dockingplatten zur Ver- bzw. Entsorgung der Festhaltevorrichtung zur Aufnahme eines Bandanfanges und zum Einfädeln desselben sind in den Patentansprüchen 5 bis 7 angegeben.

Ein weiteres reibungsschlüssiges Festhalten des Bandanfanges im Schleppwagen mittels Drehkeilen ist Gegenstand der Ansprüche 8 bis 11. Der Bandanfang kann auch formschlüssig im Schleppwagen vorübergehend festgehalten werden, worauf die Patentansprüche 12 bis 15 gerichtet sind.

Einzelheiten, Merkmale und Vorteile der Erfindung ergeben sich aus der nachstehenden Erläuterung der in den Zeichnungen schematisch dargestellten Ausführungsbeispiele.

Es zeigen:
- Fig. 1: eine erfindungsgemäße Vorrichtung in teilgeschnittener, schematischer Perspektivansicht,
- Fig. 2: alternative Ausführung des Linearmotors zu Fig. 1,
- Fig. 3a: wie Fig. 1, jedoch mit alternativer Ausführung der Festhaltevorrichtung für das Band am Schleppwagen,
- Fig. 3b: Festhaltevorrichtung gemäß Fig. 3a in teilgeschnittener Seitenansicht,
- Fig. 4a: wie Fig. 1, jedoch mit alternativer Ausführung der Festhaltevorrichtung für das Band am Schleppwagen,
- Fig. 4b: Festhaltevorrichtung gemäß Fig. 4a in teilgeschnittener Seitenansicht,
- Fig. 5: Schema einer Beizanlage im Einlaufteil mit Anordnung des Schleppwagens in Startposition,
- Fig. 6: Schema einer Beizanlage im Auslaufteil mit Anordnung des Schleppwagens in Endposition.

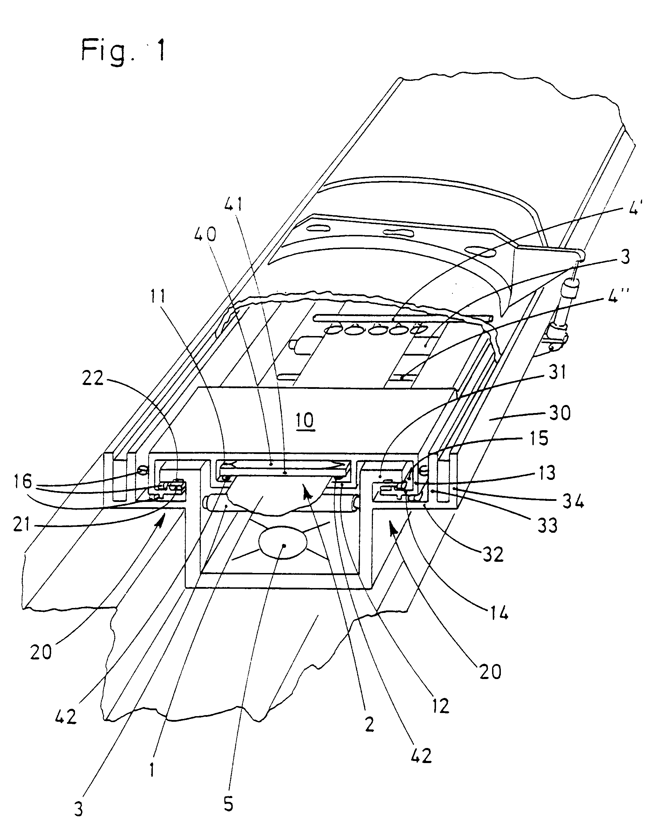

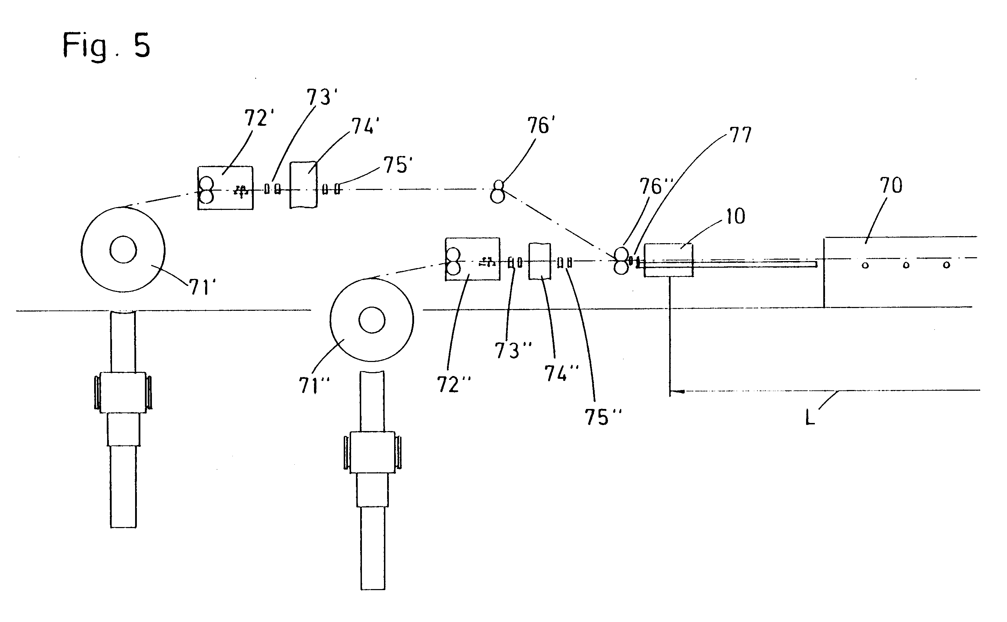

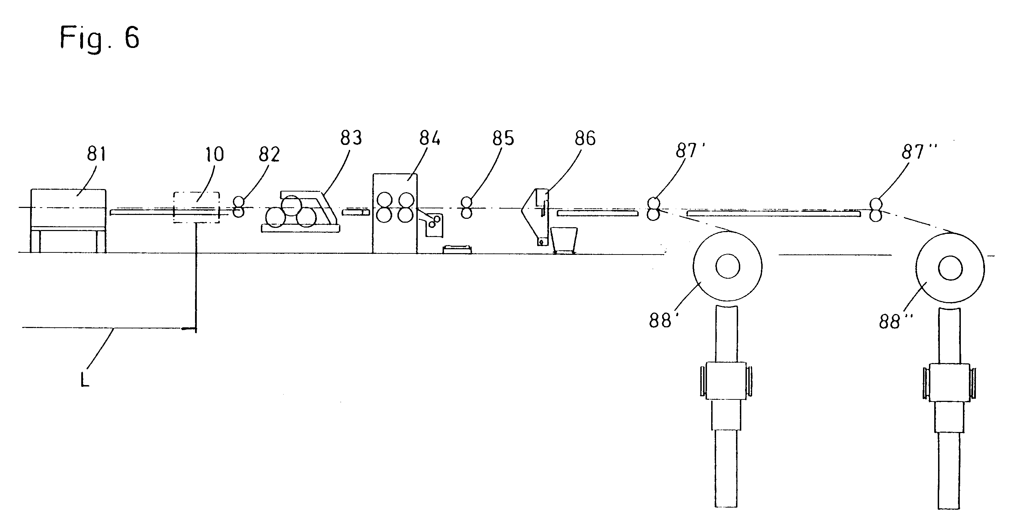

Figur 1 zeigt ein erfindungsgemäßes Vorschubsystem für Bandmaterial zum Transportieren eines Metallbandes (1) über eine Förderstrecke von etwa 100 bis 300 m Länge bei einer Beizanlage (vgl. (L) in Fig. 5 und 6), wobei das Band bzw. der Bandanfang (1) in einem Transport- oder Schleppwagen (10) bzw. in dessen Kammer (11) mittels einer Festhaltevorrichtung (2) vorübergehend festgehalten und durch je einen randseitig am Schleppwagen (10) angeordneten, reversierbaren Linearmotor (20) über die Förderstrecke (L) entlang einer Schienenführung (30) gefördert wird. In der Beizanlage, durch die der Transportwagen (10) den Bandanfang (1) zieht, liegt das Band bekanntermaßen auf Tragrollen (3) oder auf dem Boden der Beizbehälter und wird von oben und unten über Spritzrohre (4′, 4˝) mit Säure besprüht oder durch das Säurebad gezogen. Die Säure wird über die Abläufe (5) wieder abgezogen. Die maximale Transportgeschwindigkeit beträgt etwa 10 m/s bei einer Zugkraft von 10 kN.

Die stromdurchflossenen aktiven Motorteile (22) der Linearmotore (20) sind in der Schienenführung (30) integriert, wogegen die aus Dauermagneten bestehenden Reaktionsteile (21) der Linearmotore im Schleppwagen (10) integriert sind. Der Schleppwagen (10) ist plattenförmig ausgebildet und randseitig mit nach unten gerichteten senkrechten Leisten (13) und daran anschließend waagerechten Abwinkelungen (14) versehen. Die Abwinkelungen bzw. Wände (13, 14) bilden in Fahrtrichtung sich erstreckende, nach innen offene Kammern (15), wobei die Schienenführung (30) nach außen weisende waagerechte Abkröpfungen (31) hat, die in die Kammern (15) labyrinthartig eingreifen. Die Schienenführung (30) hat weitere, sich waagerecht nach außen (32) und senkrecht aufwärts erstreckende Abkröpfungen (33, 34), von denen die waagerechte Abkröpfung (32) unterhalb der waagerechten Abkröpfung bzw. Abwinkelung (14) des Schleppwagens (10) und die senkrechten Abkröpfungen (33, 34) außerhalb der senkrechten Abkröpfung (13) des Schleppwagens (10) verlaufen. Die senkrechten und waagerechten Abkröpfungen (13, 14) des Schleppwagens (10) sind mit Führungsrollen (16) senkrechter bzw. waagerechter Achslage versehen, die den Schleppwagen (10) an den senkrechten und waagerechten Abkröpfungen (33; 32, 31) der Schienenführung (30) abstützen und führen. Die in die Kammern (15) eintretenden waagerechten Abkröpfungen (31) der Schienenführung (30) sind auf ihren unteren Flächen mit den aktiven Motorteilen (22) und die waagerechten Abkröpfungen (14) des Schleppwagens (10) auf ihren oberen Flächen mit den Dauermagneten der Reaktionsteile (21) der Linearmotore (20) versehen.

Die druckluftbetätigte Festhaltevorrichtung (2) besteht vorzugsweise aus einem geschlossenen Luftbalg (40) oder mehreren derartiger Luftbälge sowie einer Steuerung für die Druckluft, um bei dessen Entspannung im Luftbalg (40) Unterdruck zu erzeugen. Zweckmäßigerweise handelt es sich um ein Druckluftkissen-Element mit verteiltem Luftaustritt, dem zur Erzeugung eines ausreichenden Reibungsbeiwertes ein Klemmbalken (41) zugeordnet ist, an den der Bandanfang (1) festklemmbar ist. Der Klemmbalken (41) ist unterhalb des Druckluftkissen-Elementes (40) angeordnet und ruht auf einem Paar von druckluftbetätigten Hubelementen (42). Der eingeführte Bandanfang (1) wird dabei gegen eine waagerechte Begrenzungswand (12) der Kammer (11) festgeklemmt. Zur Einleitung, Absperrung und Entspannung der Druckluft ist der Schleppwagen (10) als sogenannte Dockingfestplatte ausgebildet (nicht dargestellt), wobei am Anfang und am Ende der Förderstrecke (L) je eine in Förderrichtung über eine Kuppelstrecke hin- und herbewegliche Dockingplatte vorgesehen ist, die über Schlauchleitungen an stationäre Druckluftquellen angeschlossen sind, wobei die Dockingfestplatte des Schleppwagens und die beweglichen Dockingplatten an ihren stirnseitig gegenüberliegenden Rändern mit druckluftbetätigten Streckverbindungen für Druckluft mit Druckhaltefunktion und für die vorübergehende Ankopplung der beweglichen Dockingplatten an die wagenseitige Dockingfestplatte ausgerüstet sind, um den Bandanfang während der Bewegung festzuklemmen und zu lösen, nachdem der Bandanfang am Ende der Förderstrecke angelangt ist.

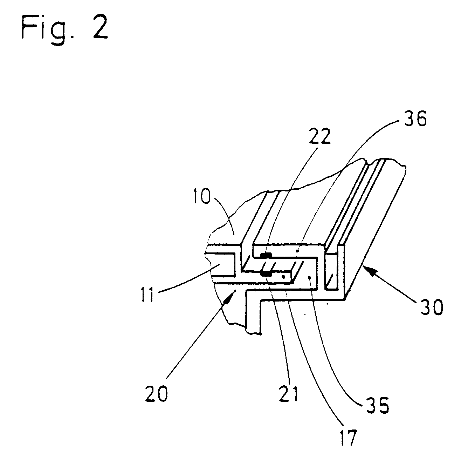

Gemäß Figur 2 ist der Schleppwagen (10) in einer alternativen Ausgestaltung wiederum plattenartig ausgebildet, aber mit nach außen weisenden Rändern (17) versehen, die in sich in Fahrtrichtung erstreckende, nach innen offene Kammern (35) der Schienenführung (30) eingreifen. Die Ränder (17) sind auf ihren oberen Flächen mit den Dauermagneten der Reaktionsteile (21) der Linearmotore (20) und die die Kammern nach oben begrenzenden Wände (36) der Schienenführung (30) mit den aktiven Motorteilen (22) versehen. Jedoch können an den nach außen weisenden Rändern (17) auch Räder mit horizontaler und vertikaler Achslage angebracht werden, um den Schleppwagen (10) genau wie in Fig. 1 abzustützen und damit eine alternative Lösung der Führung des Schleppwagens anzugeben. Eine weitere Ausgestaltung der Erfindung nach Fig. 1 und Fig. 2 besteht darin, daß die Dauermagnete (21) hinsichtlich ihrer Magnetkraft so ausgelegt sind, daß die Ränder (17) des Schleppwagens - und damit der Schleppwagen (10) selbst - innerhalb der Kammern (35) der Schienenführung (30) im Sinne einer Magnetschwebebahn geführt und in der Schwebe gehalten werden. Führungsrollen (wie bei Fig. 1, Ziffer 16) sind hierbei nicht vorgesehen.

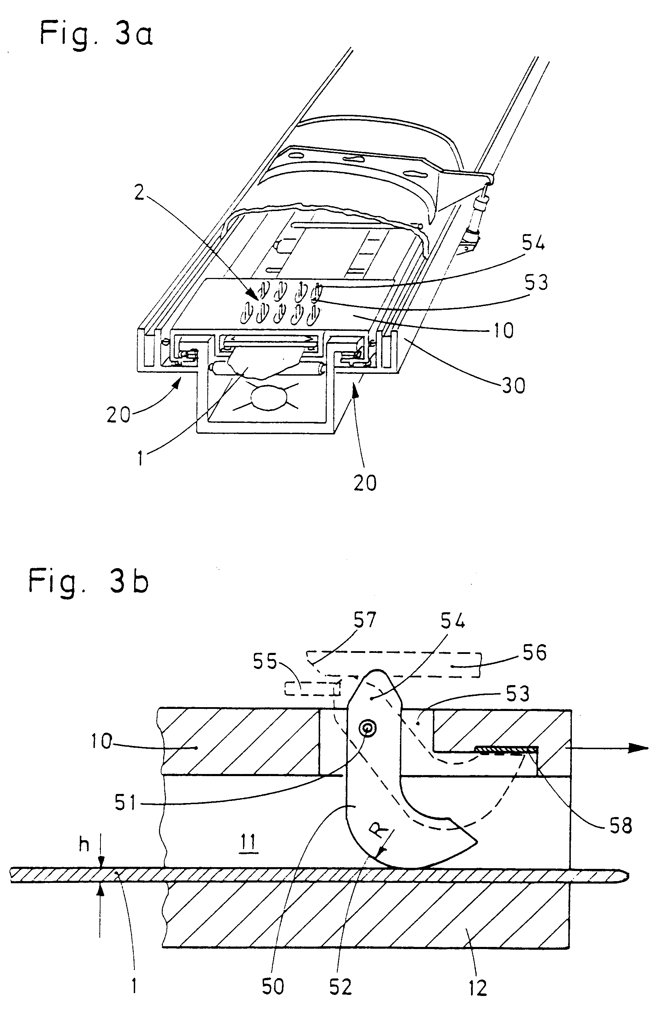

Aus den Figuren 3a und 3b ist ersichtlich, daß zum reibungsschlüssigen Festhalten des Bandanfanges (1) die Festhaltevorrichtung (2) auch aus mindestens einer Reihe von Drehkeilen (50) bestehen kann, die oberhalb der das Band aufnehmenden Kammer (11) des Schleppwagens (10) an Schwenkachsen (51) hängend frei drehbar gelagert sind. Die gekrümmte äußere Klemmfläche (52) eines jeden Drehkeils verläuft in Relation zur Schwenkachse (51) exzentrisch, so daß der auf der unteren Kammerwand (12) des Schleppwagens (10) aufliegende Bandanfang (1) bei jeder vorkommenden Banddicke (h) vor Erreichen der stabilen Hängelage des Drehkeils (50) auf der Oberfläche des Bandanfanges (1) reibungsschlüssig aufliegt und dieses durch eine Drehbewegung des Drehkeils (50) auf der unteren Kammerwand (12) selbsttätig festklemmt, wenn der Schleppwagen (10) in Förderrichtung gestartet wird. Am Ende der Förderstrecke (L) wird durch eine Relativbewegung zwischen dem Schleppwagen (10) und dem Band (1) der Drehkeil (50) zurückgedreht und die Klemmverbindung selbsttätig gelöst. Jeder Drehkeil (50) hat in der gezeigten Ausgestaltung einen durch die Schlitze (53) in der oberen Kammerwand des Schleppwagens (10) herausragenden Betätigungsarm (54), wobei jedem Betätigungsarm (54) in der Startposition des Schleppwagens (10) ein ortsfester Einschaltnocken (55) zur Unterstützung des Klemmvorganges und in der Endposition des Schleppwagens ein ortsfester Ausschaltnocken (56) mit einer Auflauffläche (57) zum Lösen der Klemmverbindung zugeordnet ist. Die Auflaufflächen (57) der Ausschaltnocken (56) erstrecken sich bis in einen waagerechten Abschnitt, auf den sie von den Schwenkachsen (51) der Drehkeile (50) einen solchen Abstand haben, der eine Rückdrehung der Drehkeile (50) bis in den Bereich von Haltevorrichtungen (58) am Schleppwagen (10) bewirkt, deren Haltekraft durch Anschlag der Betätigungsarme (54) an den Einschaltnocken (55) überwindbar ist. Zweckmäßigerweise bestehen die Haltevorrichtungen (58) aus Dauermagneten.

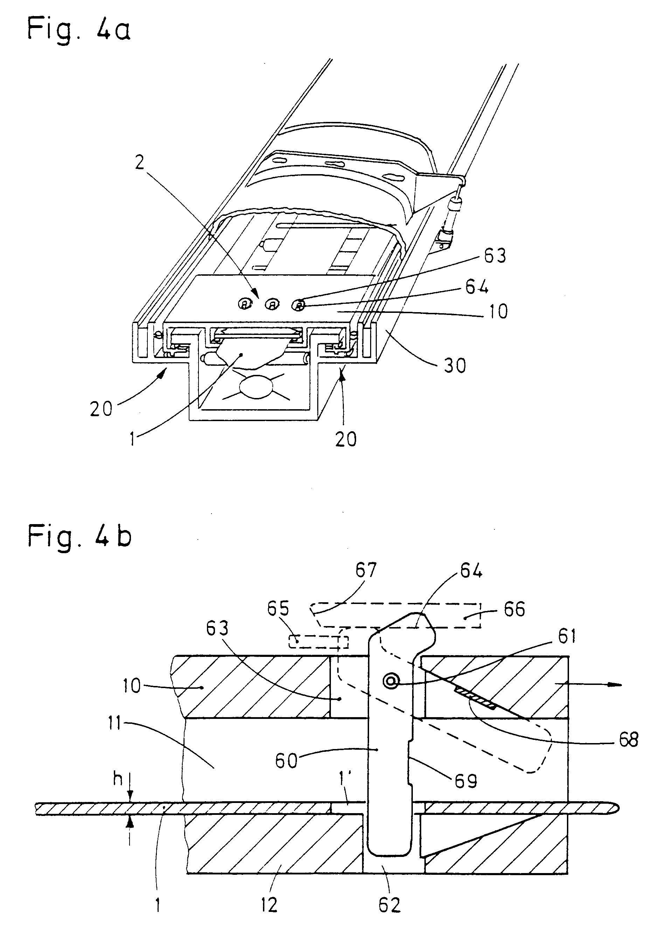

Aus den Figuren 4a und 4b ist ersichtlich, daß die Festhaltevorrichtung (2) auch formschlüssig ausgestaltet sein kann und zwar aus mindestens einer Reihe von Schwenkhebeln (60) besteht, die oberhalb der das Band aufnehmenden Kammer (11) des Schleppwagens (10) an Schwenkachsen (61) hängend drehbar gelagert sind. Die untere Begrenzungswand (12) der Kammer (11) ist in der senkrechten Projektion eines jeden Schwenkhebels (60) mit Ausnehmungen (62) versehen, in die die Schwenkhebel (60) aus einer in Vorschubrichtung weisenden Schräglage in ihrer stabilen Hängelage einzugreifen vermögen, um den mit korrespondierenden eingestanzten Löchern (1′) versehenen Bandanfang (1) formschlüssig mit dem Schleppwagen (10) zu verriegeln, wenn der Schleppwagen (10) in Förderrichtung gestartet wird Am Ende der Förderstrecke (L) werden durch eine Relativbewegung zwischen dem Schleppwagen (10) und dem Band die Schwenkhebel (60) in die entriegelnde Schräglage zurückgeschwenkt. Jeder Schwenkhebel (60) hat einen durch Schlitze (63) in der oberen Kammerwand des Schleppwagens (10) herausragenden Betätigungsarm (64). Jedem Betätigungsarm (64) ist in der Startposition des Schleppwagens ein ortsfester Einschaltnocken (65) zur Überführung des Schwenkhebels (60) aus seiner Schräglage in die verriegelnde stabile Hängelage und in der Endposition ein ortsfester Ausschaltnocken (66) mit einer Auflauffläche (67) zum Schrägstellen der Schwenkhebel und Entriegeln des Bandanfanges zugeordnet. Die Auflaufflächen (67) der Ausschaltnocken (66) erstrecken sich bis in einen waagerechten Abschnitt, auf dem sie von den Schwenkachsen (61) der Schwenkhebel (60) einen solchen Abstand haben, der eine Rückdrehung der Schwenkhebel (60) in Schräglage bewirkt, in der die Schwenkhebel (60) von Haltevorrichtungen (68) des Schleppwagens mit einer Haltekraft festgehalten werden, die durch Anschlag der Betätigungsarme (64) an den Einschaltnocken (65) überwindbar ist. Vorteilhaft bestehen die Haltevorrichtungen (68) aus Dauermagneten. Weiterhin werden vorne an den Haltenocken (60) Flächen (69) so bearbeitet, daß, wenn in der Endposition des Tragwagens (10) der Schaltnocken (66) die Haltenocken (60) angehoben hat, diese, an im Tragwagen (10) angebrachte Dauermagnete (68), gehoben werden. Die Haftkraft der Dauermagnete (68) ist so gewählt, daß die Haltenocken (60) sicher gehalten werden und während des Zurückfahrens des Tragwagens (10) keine Berührung mit dem Band (1) haben. In der Startposition des Tragwagens (10) wird dann diese Haftung der Haltenocken an den Dauermagenten (68) durch den stationär angeordneten, federbelasteten Schaltnocken (65) wieder aufgehoben.

Anhand der Figuren 5 und 6 wird die Betriebsweise des erfindungsgemäßen Vorschubsystems mit Magnetantrieb für den Transportwagen (10) und einer formschlüssigen Verbindung gemäß Fig. 4a und 4b zwischen Band und Tragwagen (10) bei einer Beizanlage (70) mit Vorwärmung und Säurebehandlung näher erläutert.

Im Einlaufteil der Anlage sind gemäß Figur 5 jeweils hinter der Richtmaschine (72′, 72'') in Bandlaufrichtung eine Bandzentrierung (73′, 73˝), eine Lochstanze (74′, 74˝) und eine weitere Bandzentrierung (75′, 75˝) angeordnet. Der vom Abwickelhaspel (71′, 71˝) kommende Bandanfang (vgl. Fig. 1, Ziffer 1) wird in den beiden Bandzentrierungen (73′, 75′; 73˝, 75‴) so zentriert, daß unabhängig von der Bandbreite die Bandmitte auf Anlagenmitte gebracht wird. Die zwischen den Bandzentrierungen angeordneten Lochstanzen (74′, 74˝) stanzen runde oder elipsenförmige Löcher (vgl. Fig. 4b, Ziffer 1′) in den Bandanfang (1). Der so vorbereitete Bandanfang wird dann dem Tragwagen (10) über die Umlenktreiber (76′, 76˝) zugeführt und ebenfalls über Bandzentrierung (77) auf Anlagenmitte zentriert.

Im Tragwagen (10) sind - wie vorstehend bei der Beschreibung der Fig. 4a und 4b bereits erwähnt - über die Bandbreite gemäß Fig. 4b eine Reihe Bohrungen oder Schlitze (63) vorgesehen, in denen die Haltenocken (60) drehbar gelagert sind. Der ankommende, auf Anlagenmitte zentrierte Bandanfang (1) schiebt selbsttätig die Haltenocken (60) soweit auf, bis sie in die ausgestanzten Löcher (1′) im Band fallen oder über den in der Startposition des Tragwagens (10) stationär angeordneten, federbelasteten Schaltnocken (65) in die Löcher gedrückt werden. Die Durchmesser der Löcher (1′) im Band (1) und die Durchmesser der Haltenocken (60) werden zueinander so gewählt, daß ein sicheres Halten des Bandes gewährleistet ist.

Durch den mittels Magnetantrieb bzw. Linearmotor (20) nunmehr in Bewegung gesetzten Tragwagen (10) werden die Vorderkanten der Haltenocken (60) an die Vorderkante der Löcher (1′) im Band (1) und die Hinterkanten der Haltenocken an die Anlagekanten im unteren Teil des Tragwagens gepreßt und somit die formschlüssige Verbindung hergestellt. In der Start- und Endposition des Tragwagens (10) sind im übrigen die Schaltnocken (65, 66), in die der Tragwagen (10) hineinfährt, so angebracht, daß das Schließen bzw. Öffnen der Haltenocken (60) unterstützt wird.

In Figur 6 wird die Endposition des Schleppwagens (10) im Auslaufteil der Beizanlage (70) mit nachgeschaltetem Trockner (81) schematisch dargestellt. Der in der Endposition des Transportwagens (10) nach Durchlaufen der Förderstrecke (L) nunmehr wieder entkuppelte Bandanfang (1) wird vom Treiber (82) aufgenommen und in Bandlaufrichtung einer Bandsteuereinrichtung (83) und einer Besäumeinrichtung (84) zugeführt und sodann von einem weiteren Treiber (85) erfaßt Nach Querteilung in einer Schere (86) werden die Teillängen in bekannter Weise über Umlenktreiber (87′, 87˝) geführt und von den Haspeln (88′, 88˝) aufgewickelt.

## Patentansprüche

1. Vorschubsystem für Bandmaterial zum Transportieren eines Bandes über eine Förderstrecke begrenzter Länge, insbesondere bei Bandbehandlungsanlagen für Metallband, mit einem an einer Schienenführung (30) geführten, das Band (1) aufnehmenden Schleppwagen (10) mit einer Vorrichtung (2) zum vorübergehenden Festhalten des Bandanfanges am Schleppwagen (10) sowie mit einer reversierbaren Antriebsvorrichtung für den Antrieb des Schleppwagens (10) entlang der Förderstrecke (L), **gekennzeichnet durch** je einen randseitig des Schleppwagens angeordneten, reversierbaren Linearmotor (20) zum Antrieb des Schleppwagens (10) über die Förderstrecke (L), deren stromdurchflossene aktive Motorteile (22) in der Schienenführung (30) integriert sind, wogegen die aus Dauermagneten bestehenden Reaktionsteile (21) der Linearmotore im Schleppwagen (10) integriert sind.

2. Vorschubsystem nach Anspruch 1, **dadurch gekennzeichnet**, daß der das Band (1) in einer Kammer (11) aufnehmende Schleppwagen (10) plattenförmig ausgebildet und randseitig mit senkrechten (13) und anschließend waagerechten Abwinkelungen (14) versehen ist, die sich in Fahrtrichtung erstreckende, nach innen offene Kammern (15) bilden, daß die Schienenführung (30) nach außen weisende, waagerechte Abkröpfungen (31) hat, die in die Kammern (15) labyrinthartig eingreifen, daß die Schienenführung (30) weitere, sich waagerecht nach außen (32) und senkrecht aufwärts erstreckende Abkröpfungen (33, 34) hat, von denen die waagerechte Abkröpfung (32) unterhalb der waagerechten Abkröpfung (14) des Schleppwagens (10) und die senkrechte Abkröpfung (33, 34) außerhalb der senkrechten Abkröpfung (13) des Schleppwagens (10) verläuft, daß die senkrechten und waagerechten Abkröpfungen (13, 14) des Schleppwagens (10) mit Führungsrollen (16) senkrechter bzw. waagerechter Achslage versehen sind, die den Schleppwagen (10) an den senkrechten und waagerechten Abkröpfungen (33; 32, 31) der Schienenführung (30) führen, und daß die in die Kammern (15) eintretenden waagerechten Abkröpfungen (31) der Schienenführung (30) auf ihren unteren Flächen mit den aktiven Motorteilen (22) und die waagerechten Abkröpfungen (14) des Schleppwagens (10) auf ihren oberen Flächen mit den Dauermagneten der Reaktionsteile (21) der Linearmotore (20) versehen sind.

3. Vorschubsystem nach Anspruch 2, dadurch gekennzeichnet, daß der Schleppwagen (10) plattenartig ausgebildet und mit nach außen weisenden Rändern (17) versehen ist, die in sich in Fahrtrichtung erstreckende, nach innen offene Kammern (35) der Schienenführung (30) eingreifen, und daß die Ränder (17) auf ihren oberen Flächen mit den Dauermagneten der Reaktionsteile (21) und die die Kammern nach oben begrenzenden Wände (36) der Schienenführung (30) mit den aktiven Motorteilen (22) der Linearmotore (20) versehen sind, wobei die Dauermagnete (21) hinsichtlich ihrer Magnetkraft dafür ausgelegt sind, die Ränder (17) des Schleppwagens (10) und damit den Schleppwagen innerhalb der Kammern (35) der Schienenführung (30) im Sinne einer Magnetschwebebahn geführt in der Schwebe zu halten.

4. Vorschubsystem nach mindestens einem der Ansprüche 1 bis 3, dadurch gekennzeichnet, daß zum reibungsschlüssigen Festhalten des Bandanfanges (1) die Vorrichtung (2) zum vorübergehenden Festhalten des Bandanfanges druckluftbetätigt und innerhalb der Kammer (11) des plattenartig ausgebildeten Schleppwagens (10) mitwandernd fixiert ist, um den eingeführten Bandanfang (1) gegen eine waagerechte Begrenzungswand (12) der Kammer (11) festzuklemmen, daß zur Einleitung, Absperrung und Entspannung der Druckluft der Schleppwagen als sogenannte Dockingfestplatte (41) ausgebildet ist, und daß am Anfang und am Ende der Förderstrecke (L) je eine in Förderrichtung über eine Kuppelstrecke hin- und herbewegliche Dockingplatte vorgesehen sind, die über Schlauchleitungen an stationäre Druckluftquellen angeschlossen sind, wobei die Dockingfestplatte (41) des Schleppwagens (10) und die beweglichen Dockingplatten an ihren stirnseitig gegenüberliegenden Rändern mit druckluftbetätigten Streckverbindungen für Druckluft mit Druckhaltefunktion und für die vorübergehende Ankopplung der beweglichen Dockingplatten an die wagenseitige Dockingfestplatte ausgerüstet sind, um den Bandanfang während der Bewegung festzuklemmen und zu lösen, nachdem der Bandanfang am Ende der Förderstrecke angelangt ist.

5. Vorschubsystem nach Anspruch 4, dadurch gekennzeichnet, daß die druckluftbetätigte Festhaltevorrichtung (2) aus einem geschlossenen Luftbalg (40) und einer Steuerung für die Druckluft besteht, um bei dessen Entspannung im Luftbalg (40) Unterdruck zu erzeugen.

6. Vorschubsystem nach Anspruch 4, gekennzeichnet durch ein Druckluftkissen-Element (40) mit verteiltem Luftaustritt, dem zur Erzegung eines Reibungsbeiwertes ein Klemmbalken (41) zugeordnet ist, an den der Bandanfang (1) festklemmbar ist.

7. Vorrichtung nach Anspruch 6, dadurch gekennzeichnet, daß der Klemmbalken (41) unterhalb des Druckluftkissen-Elementes (40) angeordnet ist und auf einem Paar von druckluftbetätigten Hubelementen (42) ruht.

8. Vorrichtung nach mindestens einem der Ansprüche 1 bis 3, dadurch gekennzeichnet, daß zum reibungsschlüssigen Festhalten des Bandanfanges (1) die Vorrichtung zum vorübergehenden Festhalten des Bandanfanges (2) aus mindestens einer Reihe von Drehkeilen (50) besteht, die oberhalb der das Band aufnehmenden Kammer (11) des Schleppwagens (10) an Schwenkachsen (51) hängend frei drehbar gelagert sind, daß die gekrümmte äußere Klemmfläche (52) eines jeden Drehkeils in Relation zur Schwenkachse (51) exzentrisch verläuft derart, daß der auf der unteren Kammerwand (12) des Schleppwagens aufliegende Bandanfang (1) bei jeder vorkommenden Banddicke (h) vor Erreichen der stabilen Hängelage des Drehkeils auf der Oberfläche des Bandanfanges reibungsschlüssig aufliegt und dieses durch eine Drehbewegung des Drehkeils (50) auf der unteren Kammerwand (12) selbsttätig festklemmt, wenn der Schleppwagen in Förderrichtung gestartet wird, bis am Ende der Förderstrecke (L) durch eine Relativbewegung zwischen dem Schleppwagen (10) und dem Band (1) der Drehkeil (50) zurückgedreht und die Klemmverbindung selbsttätig gelöst wird.

9. Vorschubsystem nach Anspruch 8, dadurch gekennzeichnet, daß jeder Drehkeil (50) einen durch Schlitze (53) in der oberen Kammerwand des Schleppwagens (10) herausragenden Betätigungsarm (54) hat, daß jedem Betätigungsarm (54) in der Startposition des Schleppwagens (10) ein ortsfester Einschaltnocken (55) zur Unterstützung des Klemmvorganges zugeordnet ist, und daß jedem Betätigungsarm (54) in der Endposition des Schleppwagens ein ortsfester Ausschaltnocken (56) mit einer Auflauffläche (57) zum Lösen der Klemmverbindung zugeordnet ist.

10. Vorschubsystem nach Anspruch 9, dadurch gekennzeichnet, daß die Auflaufflächen (57) der Ausschaltnocken (56) sich bis in einen waagerechten Abschnitt erstrecken, auf den sie von den Schwenkachsen (51) der Drehkeile (50) einen solchen Abstand haben, der eine Rückdrehung der Drehkeile (50) bis in den Bereich von Haltevorrichtungen (58) am Schleppwagen (10) bewirkt, deren Haltekraft durch Anschlag der Betätigungsarme (54) an den Einschaltnocken (55) überwindbar ist.

11. Vorschubsystem nach Anspruch 10, dadurch gekennzeichnet, daß die Haltevorrichtungen (58) aus Dauermagneten bestehen.

12. Vorschubsystem nach mindestens einem der Ansprüche 1 bis 3, dadurch gekennzeichnet, daß zum formschlüssigen Festhalten des Bandanfanges (1) die Vorrichtung (2) zum vorübergehenden Festhalten des Bandanfanges aus mindestens einer Reihe von Schwenkhebeln (60) besteht, die oberhalb der das Band aufnehmenden Kammer (11) des Schleppwagens (10) an Schwenkachsen (61) hängend drehbar gelagert sind, daß die untere Begrenzungswand (12) der Kammer (11) in der senkrechten Projektion eines jeden Schwenkhebels (60) mit Ausnehmungen (62) versehen sind, in die die Schwenkhebel (60) aus einer in Vorschubrichtung weisenden Schräglage in ihrer stabilen Hängelage einzugreifen vermögen, um den mit korrespondierenden eingestanzten Löchern (1′) versehenen Bandanfang (1) formschlüssig mit dem Schleppwagen (10) zu verriegeln, wenn der Schleppwagen (10) in Förderrichtung gestartet wird, bis am Ende der Förderstrecke (L) durch eine Relativbewegung zwischen dem Schleppwagen und dem Band die Schwenkhebel (60) in die entriegelnde Schräglage zurückgeschwenkt sind.

13. Vorschubsystem nach Anspruch 12, dadurch gekennzeichnet, daß jeder Schwenkhebel (60) einen durch Schlitze (63) in der oberen Kammerwand des Schleppwagens (10) herausragenden Betätigungsarm (64) hat, daß jedem Betätigungsarm (64) in der Startposition des Schleppwagens ein ortsfester Einschaltnocken (65) zur Überführung des Schwenkhebels (60) aus seiner Schräglage in die verriegelnde stabile Hängelage zugeordnet ist, und daß jedem Betätigungsarm (64) in der Endposition des Schleppwagens ein ortsfester Ausschaltnocken (66) mit einer Auflauffläche (67) zum Schrägstellen der Schwenkhebel und Entriegeln des Bandanfanges zugeordnet ist.

14. Vorschubsystem nach Anspruch 13, dadurch gekennzeichnet, daß die Auflaufflächen (67) der Ausschaltnocken (66) sich bis in einen waagerechten Abschnitt erstrecken, auf dem sie von den Schwenkachsen (61) der Schwenkhebel (60) einen solchen Abstand haben, der eine Rückdrehung der Schwenkhebel (60) in Schräglage bewirkt, in der die Schwenkhebel (60) von Haltevorrichtungen (68) des Schleppwagens mit einer Haltekraft festgehalten werden, die durch Anschlag der Betätigungsarme (64) an den Einschaltnocken (65) überwindbar ist.

15. Vorschubsystem nach Anspruch 14, dadurch gekennzeichnet, daß die Haltevorrichtungen (68) aus Dauermagneten bestehen.

## Claims

1. Advancing system for strip material for transporting a strip over a conveying path of limited length, in particular in strip-processing plants, for metal strip, with a traction carriage (10), which receives the strip (1) and is guided at a rail guide (30), with a device (2) for the temporary firm retention of the beginning of the strip at the traction carriage (10) as well as with a reversible drive device for the drive of the traction carriage (10) along the conveying path (L), characterised by a respective reversible linear motor (20), which is arranged at each rim side of the traction carriage (10) for the drive of the traction carriage (10) over the conveying path (L) and the active motor parts (22) of which flowed through by current are integrated in the rail guide (30), whereagainst the reaction parts (21), which consist of permanent magnets, of the linear motors are integrated in the traction carriage (10).

2. Advancing system according to claim 1, characterised thereby, that the traction carriage (10), which receives the strip (1) in a chamber (11), is constructed in plate shape and provided at the rim side with vertical bent-over portions (13) and adjoining horizontal bent-over portions (14), which form inwardly open chambers (15) extending in direction of travel, that the rail guide (30) has outwardly pointing horizontal bent portions (31), which engage into the chambers (15) in the manner of a labyrinth, that the rail guide (30) has further bent portions (32) extending horizontally outwards and bent portions (33, 34) extending vertically upwards, of which the horizontal bent portion (32) extends underneath horizontal bent portions (14) of the traction carriage (10) and the vertical bent portion (33, 34) extends outside the vertical bent portion (13) of the traction carriage (10), that the vertical and horizontal bent portions (13, 14) of the traction carriage (10) are provided with guide rollers (16) of respectively vertical and horizontal axial positions, which guide the traction carriage (10) at the vertical and horizontal bent portions (33; 32, 31) of the rail guide (30) and that the horizontal bent portions (31) of the rail guide (30), which enter into the chambers (15), are provided on their lower surfaces with the active motor parts (22) and the horizontal bent portions (14) of the traction carriage (10) are provided on their upper surfaces with the permanent magnets of the reaction parts (21) of the linear motors (20).

3. Advancing system according to claim 2, characterised thereby, that the traction carriage (10) is constructed in the manner of a plate and provided with outwardly pointing rims (17), which engage into inwardly open chambers (35) of the rail guide (30), which extend in direction of travel, and that the rims (17) are provided on their upper surfaces with the permanent magnets of the reaction parts (21) and the walls (36) of the rail guide (30), which bound the chambers upwardly, are provided with the active motor parts (22) of the linear motors (20), wherein the permanent magnets (21) are designed in respect of their magnetic force for keeping the rims (17) of the traction carriage (10) and thereby the traction carriage (10) in suspension within the chambers (35) of the rail guide (30) and guided in the sense of a magnetic hover track.

4. Advancing system according to at least one of the claims 1 to 3, characterised thereby, that for the frictionally locking retention of the beginning of the strip (1), the device (2) for the temporary firm retention of the beginning of the strip is actuated by compressed air and fixed within the chamber (11) of the traction carriage (10) constructed in the manner of a plate to move therewith in order firmly to clamp the introduced beginning of the strip (1) against an horizontal boundary wall (12) of the chamber (11), that the traction carriage is constructed as so-called fixed docking plate (41) for the introduction, shut-off and relief of the compressed air, that a respective movable docking plate, which is connected by hose ducts to stationary sources of compressed air and reciprocatable over a coupling path in conveying direction, is provided at the beginning and at the end of the conveying path (L), wherein the fixed docking plate (41) of the traction carriage (10) and the movable docking plates are provided at their opposite end face rims with compressed-air-actuated plug connections for compressed air with pressure-holding function and are equipped for the temporary coupling of the movable docking plates to the fixed docking plate at the carriage in order to firmly clamp the beginning of the strip during the movement and to release it after the beginning of the strip has reached the end of the conveying path.

5. Advancing system according to claim 4, characterised thereby, that the compressed-air-actuated retaining device (2) consists of a closed air bellows (40) and a control for the compressed air in order on its relief to produce underpressure in the air bellows (40).

6. Advancing system according to claim 4, characterised thereby, that a compressed air cushion element (40) with distributed air exit, which is associated with a clamping beam (41), against which the beginning of the strip (1) is firmly clampable, for the production of a coefficient of friction.

7. Advancing system according to claim 6, characterised thereby, that the clamping beam (41) is arranged underneath the compressed air cushion element (40) and rests on a pair of compressed-air-actuated lifting elements (42).

8. Advancing system according to at least one of the claims 1 to 3, characterised thereby, that for the frictionally locking retention of the beginning of the strip (1), the device (2) for the temporary firm retention of the beginning of the strip consists of at least one row of rotary wedges (50), which are borne to be freely rotatable hanging at pivot axles (51) above the chamber (11), which receives the strip, of the traction carriage (10), that the curved outer clamping surface (52) of each rotary wedge extends eccentrically in relation to the pivot axle (51) in such a manner that the beginning of the strip (1) resting on the lower chamber wall (12) of the traction carriage (10) rests frictionally locking on the surface of the beginning of the strip before reaching the stable hanging position of the rotary wedge for any arising strip thickness (h) and automatically clamps the beginning of the strip fast on the lower chamber wall (12) by a rotational movement of the rotary wedge (50) when the traction carriage is started in conveying direction until the rotary wedge (50) is rotated back by a relative movement between the traction carriage (10) and the strip (1) at the end of the conveying path (L) and the clamping connection is undone automatically.

9. Advancing system according to claim 8, characterised thereby, that each rotary wedge (50) has an actuating arm (54) projecting out through slots (53) in the upper chamber wall of the traction carriage (10), that each actuating arm (54) is associated in the starting position of the traction carriage (10) with a fixedly located switching-on cam (55) for enhancement of the clamping operation and that each actuating arm (54) is associated in the end position of the traction carriage (10) with a fixedly located switching-off cam (56) with a ramp surface (57) for undoing the clamping connection.

10. Advancing system according to claim 9, characterised thereby, that the ramp surfaces (57) of the switching-off cams (56) extend into an horizontal portion, on which they have such a spacing from the pivot axles (51) of the rotary wedges (50) that a reverse rotation of the rotary wedges (50) is caused into the range of retaining devices (58), which are at the traction carriage (10) and the retaining force of which is surmountable by abutment of the actuating arms (54) against the switching-on cam (55).

11. Advancing system according to claim 10, characterised thereby, that the retaining devices (58) consist of permanent magnets.

12. Advancing system according to at least one of the claims 1 to 3, characterised thereby, that for the positively locking retention of the beginning of the strip (1), the device (2) for the temporary firm retention of the beginning of the strip consists of at least one row of pivot levers (60), which are borne to be rotatable hanging at pivot axles (61) above the chamber (11), which receives the strip, of the traction carriage (10), that the lower boundary wall (12) of the chamber (11) is provided in the perpendicular projection of each pivot lever (60) with recesses (62), into which the pivot levers are capable of engaging in their stable hanging position out of an inclined position pointing in the direction of advance in order to lock the beginning of the strip (1), which is provided with corresponding punched holes (1'), positively with the traction carriage (10) when the traction carriage (10) is started in conveying direction until the pivot levers (60) are pivoted back into the unlocked inclined position by a relative movement between the traction carriage (10) and the strip (1) at the end of the conveying path (L).

13. Advancing system according to claim 12, characterised thereby, that each pivot lever (60) has an actuating arm (64) projecting through slots (63) in the upper chamber wall of the traction carriage (10), that each actuating arm (64) is associated in the starting position of the traction carriage with a fixedly located switching-on cam (65) for the transfer of the pivot lever (60) out of its inclined position into the locking stable hanging position and that each actuating arm (64) is associated in the end position of the traction carriage (10) with a fixedly located switching-off cam (66) with a ramp surface (67) for the inclined setting of the pivot levers and unlocking of the beginning of the strip.

14. Advancing system according to claim 13, characterised thereby, that the ramp surfaces (67) of the switching-off cams (66) extend into an horizontal portion, on which they have such a spacing from the pivot axles (61) of the pivot levers (60) that a reverse rotation of the pivot levers (60) is caused into inclined position, in which the pivot levers (60) are retained by retaining devices (68) of the traction carriage (10) with a retaining force which is surmountable by abutment of the actuating arms (64) against the switching-on cam.

15. Advancing system according to claim 14, characterised thereby, that the retaining devices (68) consist of permanent magnets.

## Revendications

1. Système d'avance pour feuillards pour le transport d'un feuillard sur une voie de transport d'une longueur limitée, en particulier pour des installations de traitement de feuillards métalliques, présentant un chariot-remorque (10) guidé sur un dispositif de guidage par rails (30) et contenant le feuillard (1), comportant un dispositif (2) pour le maintien provisoire du début du feuillard sur le chariot-remorque (10) ainsi qu'un dispositif d'entraînement réversible pour l'entraînement du chariot-remorque (10) le long de la voie de transport (L), caractérisé par un moteur linéaire (20) réversible, disposé sur le bord du chariot-remorque pour l'entraînement du chariot-remorque le long de la voie de transport (L) et dont les parties de moteur (22) actives, traversées par le courant sont intégrées dans le dispositif de guidage par rails (30) alors que les parties réactionnelles (21) du moteur linéaire constituées par des aimants permanents sont par contre intégrées dans le chariot-remorque (10).

2. Système d'avance selon la revendication 1, caractérisé en ce que le chariot-remorque (10) contenant le feuillard (1) dans une chambre (11) est exécuté sous forme de plaques dont les bords sont pourvus de coudes verticaux (13), prolongés par des coudes horizontaux (14) qui forment des chambres (15) s'étendant dans le sens du transport et ouvertes vers l'intérieur, en ce que le dispositif de guidage par rails (30) présente des coudes horizontaux (31) dirigés vers l'extérieur qui s'agrippent en formant un labyrinthe dans les chambres (15), en ce que le dispositif de guidage par rails (30) présente d'autres coudes dirigés horizontalement vers l'extérieur (32) et verticalement vers le haut (33, 34) dont le coude horizontal (32) s'étend au-dessous du coude horizontal (14) du chariot-remorque (10) et dont le coude vertical (33, 34) s'étend à l'extérieur du coude vertical (13) du chariot-remorque (10), en ce que les coudes verticaux et horizontaux (13, 14) du chariot-remorque (10) sont pourvus de cylindres de guidage (16) présentant des axes verticaux ou horizontaux qui guident le chariot-remorque (10) le long des coudes verticaux et horizontaux (33; 32, 31) du dispositif de guidage par rails (30) et en ce que les coudes horizontaux (31) du dispositif de guidage par rails (30) pénétrant dans les chambres (15) sont équipés sur leurs surfaces inférieures des parties actives du moteur (22) et en ce que les coudes horizontaux (14) du chariot-remorque (10) sont pourvus sur leurs surfaces supérieures des aimants permanents des parties réactionnelles (21) du moteur linéaire (20).

3. Système d'avance selon la revendication 2, caractérisé en ce que le chariot-remorque (10) est exécuté sous forme de plaques et équipé de bords (17) pointant vers l'extérieur qui s'agrippent dans la chambre (35) s'étendant dans le sens du transport et ouverte vers l'intérieur du dispositif de guidage par rails (30) et en ce que les bords (17) sont pourvus sur leurs surfaces supérieures des aimants permanents des parties réactionnelles (21) et les parois (36) limitant les chambres vers le haut du dispositif de guidage par rails (30) sont équipés des parties de moteur actives (22) du moteur linéaire (20), les aimants permanents (21) étant dimensionnés, en ce qui concerne leur force magnétique, de telle manière que les bords (17) du chariot-remorque (10) et par conséquent le chariot-remorque est maintenu en suspension dans les chambres (35) du dispositif de guidage par rails (30) en le guidant le long d'un voie de suspension magnétique.

4. Système d'avance selon au moins l'une quelconque des revendications 1 à 3, caractérisé en ce que, pour l'entraînement sans friction du début de la bande (1), le dispositif (2) est, pour la fixation provisoire du début de la bande, actionné à l'air comprimé et fixé dans la chambre (11) du chariot-remorque (10) exécuté sous forme de plaques de manière à ce qu'il le suive, pour coincer le début de la bande (1) contre une paroi limite (12) horizontale de la chambre (11), en ce que, pour l'introduction, l'arrêt et la détente de l'air comprimé, le chariot-remorque est exécuté sous forme de ce qu'on appelle une plaque Docking fixe (41) et en ce qu'au début et à la fin de la zone de transport (L), on a prévu dans le sens du transport chaque fois une plaque Docking pouvant exécuter une mouvement de va-et-vient via une zone de couplage, lesdites plaques étant reliées à des sources d'air comprimé stationnaires via des flexibles, les plaques Docking fixes (41) du chariot-remorque (10) et les plaques Docking mobiles étant équipées en leurs bords situés l un en face de l'autre d'assemblages tendeurs actionnés à l'air comprimé pour l'air comprimé avec une fonction de maintien de pression et pour l'assemblage provisoire de plaques Docking mobiles avec les plaques Docking fixes sur le chariot pour coincer le début de la bande pendant le mouvement et pour le lâcher après que le début de la bande soit arrivé à la fin de la zone de transport.

5. Système d'avance selon la revendication 4, caractérisé en ce que le dispositif de fixation (2) actionné à l'air comprimé est constitué par un soufflet à air (40) fermé et une commande pour l'air comprimé pour obtenir une dépression dans le soufflet (40) lors de la détente de l'air comprimé.

6. Système d'avance selon la revendication 4, caractérisé en ce qu'un élément à coussin d'air comprimé (40), présentant une évacuation répartie de l'air et comportant une poutre de serrage (41) pour atteindre un coefficient de friction, peut être coincé sur le début de la bande (1).

7. Dispositif selon la revendication 6, caractérisé en ce que la poutre de serrage (41) est disposée au-dessous de l'élément à coussin d'air comprimé (40) et repose sur une paire d'éléments d'élévation (42) actionnés à l'air comprimé.

8. Dispositif selon au moins une quelconque des revendications 1 à 3, caractérisé en ce que pour l'entraînement sans friction du début de la bande (1), le dispositif pour le maintien provisoire du début de la bande (2) est constitué par au moins une série de clavettes tournantes (50) logées sur des axes de pivotement de manière suspendue et à pouvoir pivoter librement au-dessus de la chambre (11) du chariot-remorque (10) comportant la bande, en ce que la surface de serrage (52) coudée extérieure de chaque clavette tournante est excentrique par rapport à l'axe de pivotement (51) de telle manière qu'elle entraîne sans friction le début de la bande (1) situé sur la paroi inférieure (12) de la chambre du chariot-remorque (10), pour chaque épaisseur (h) de la bande, avant d'atteindre la position suspendue stable de la clavette tournante sur la surface du début de la bande (1) et serre automatiquement ledit début par un mouvement de rotation de la clavette tournante (50) sur la paroi inférieure (12) de la chambre lorsque le chariot-remorque est démarré dans le sens du transport jusqu'à ce que, à la fin de la zone de transport (L), la clavette tournante (50) soit pivotée dans l'autre sens par un mouvement relatif entre le chariot-remorque (10) et la bande (1) et que l'assemblage serrant soit relâché automatiquement.

9. Système d'avance selon la revendication 8, caractérisé en ce que chaque clavette tournante (50) comporte un bras d'actionnement (54) se prolongeant à travers une fente (53) dans la paroi supérieure de la chambre du chariot-remorque (10), en ce qu on a prévu, pour chaque bras d'actionnement (54), une came de connexion (55) fixe dans la position de départ du chariot-remorque (10) pour aider le processus de serrage et en ce qu'on a prévu, pour chaque bras d'actionnement (54), une came de déconnexion (56) fixe dans la position finale du chariot-remorque avec une surface inclinée (57) pour lâcher l'assemblage serrant.

10. Système d'avance selon la revendication 9, caractérisé en ce que les surfaces inclinées (57) des cames de déconnexion (56) s'étendent jusqu'à une section horizontale où elles ont une distance par rapport aux axes de pivotement (51) des clavettes tournantes (50) telle que celle-ci provoque un pivotement en sens inverse des clavettes tournantes (50) jusqu'au niveau des dispositifs de fixation (58) sur le chariot-remorque (10) dont la force de fixation peut être vaincue lorsque le bras d'actionnement (54) bute contre les cames de déconnexion (55).

11. Système d'avance selon la revendication 10, caractérisé en ce que les dispositifs de fixation (58) sont constitués par des aimants permanents.

12. Système d'avance selon au moins une quelconque des revendications 1 à 3, caractérisé en ce que, pour l'entraînement mécanique du début de la bande (1), le dispositif (2) pour le maintien provisoire du début de la bande est constitué par au moins une série de leviers pivotants (60) qui sont logés de manière suspendue et à pouvoir pivoter librement sur des axes de pivotement (61) au-dessus de la chambre (11) du chariot-remorque (10) comportant la bande, en ce que la paroi limite (12) inférieure de la chambre (11) comporte, dans la projection verticale de chaque levier pivotant (60) des évidements (62) dans lesquels les leviers pivotants (60) peuvent s'agripper dans leur position suspendue stable, venant d'une position inclinée dans le sens de l'avancement, de manière à bloquer mécaniquement le début de la bande (1), équipé de trous estampés (1') correspondants, avec le chariot-remorque (10) lorsque le chariot-remorque (10) est démarré dans le sens du transport jusqu'à ce qu'à la fin de la zone de transport (L), les leviers pivotants (60) soient repivotés dans a position inclinée de déblocage par un mouvement relatif entre le chariot-remorque et la bande.

13. Système d'avance selon la revendication 12, caractérisé en ce que chaque levier pivotant (60) présente un bras d'actionnement (64) se prolongeant à travers une fente (63) dans la paroi supérieure du chariot-remorque (10), en ce qu'on a prévu, pour chaque bras d'actionnement (64), une came de connexion (65) fixe dans la position de départ du chariot-remorque pour amener le levier pivotant (60) de sa position inclinée dans la position suspendue stable de blocage et en ce qu'on a prévu pour chaque bras d'actionnement (64), une came de déconnexion (66) fixe dans la position finale du chariot-remorque avec une surface inclinée (67) pour incliner le levier pivotant et débloquer le début de la bande.

14. Système d'avance selon la revendication 13, caractérisé en ce que les surfaces inclinées (67) des cames de déconnexion (66) s'étendent jusqu'à une section horizontale où elles ont une distance par rapport aux axes de pivotement (61) des leviers pivotants (60) telle que celle-ci provoque un pivotement en sens inverse des leviers pivotants (60) dans la position inclinée dans laquelle les leviers pivotants sont maintenus par des dispositifs de fixation (68) du chariot-remorque (10) avec une force de fixation qui peut être vaincue lorsque le bras d'actionnement (64) bute contre les cames de déconnexion (65).

15. Système d'avance selon la revendication 14, caractérisé en ce que les dispositifs de fixation (68) sont des aimants permanents.
